# EUROPEAN PATENT APPLICATION

(11) **EP 1 862 713 A1**
(43) Date of publication of application: **05.12.2007**
(21) Application number: 06705472.6
(22) Date of filing: 13.01.2006
(51) Int. Cl.: F16K 31/06

(54) **THREE-POSITION AND FIVE-WAY ANGULAR VALVE AND AUTOMATIC WATERSUPPLY TREATING SYSTEM CONTROLLED BY IT**

(30) Priority: 18.01.2005 CN 200510023414
(71) Applicant: Chen, Kairui, Qingpu District Shanghai 201700 (CN)
(72) Inventor: Chen, Kairui, Qingpu District Shanghai 201700 (CN)
(74) Representative: Hengelhaupt, Jürgen
(86) International application number: PCT/CN2006/000050
(87) International publication number: WO 2006/076856

(57) **Abstract**

A three-position and five-way angular valve includes a controller, a turn electromagnet, and a five-way turn valve, wherein the turn electromagnet rotor, the valve rod and a manual lever are three in one by inlaying with together, so this valve is used both in automation and hand operation, space-saving, low-cost. Four kinds of automatic watersupply treating system controlled by said valve: Removing Heavy Metal Pollutant Water Purifier, can remove tens of toxic heavy metal from water, effective life is over ten years, can normally operate under adverse circumstance; Automatic Home Tap Water Treatment System, can purify bath water and drinking water simultaneously, purify bath water for ten years and need not change filter core, material replacement period for drinking water purifier is extended to several times; Bath Water Purifier, not only can ensure to be healthy in hot water bath, but also has obvious effect in hair beautification and skin protection; Waste Water Reuse System, in residence quarter and business office section, first retreat collected rainwater and other waste water, then provide washroom with retreated water.

## Description

### Technical Field

This invention relates to a valve, and a water treatment system, more particularly, it relates a three-position and five-way angular valve and automatic watersupply treating system controlled by it..

### Background

The process of water treatment actually is a process that according to pollution state of various source of water and user's requirement for water quality, to select corresponding water treatment medium, by physical or chemical or biological method, to remove or to reduce harmful pollution materials from water.

On the basis of the law of conservation of matter, the reduction of harmful materials in the incoming water certainly lead to the increase of harmful materials or the reduction of useful materials in the water treatment medium, once the increase of harmful materials or the reduction of useful materials reach a certain limit value, purification function of this water treatment medium should be lost immediately. For example, particulate active carbon can adsorb chlorine and organic compound in water, but once the adsorption reach saturation state, its adsorption function is lost wholly, if do not replace promptly, will lead to new pollution, indicated by experiment, a liter of particulate active carbon, only can purify 4 cubic meter of water; sodium ion exchange resin can displace calcium ion or magnesium ion in the incoming water, but once the content of sodium ion is reduced to a limit value, softening function of the sodium ion exchange resin is lost immediately, generally, a liter of sodium ion exchange resin, can soften 0.3 cubic meter of middle-hardness water; by means of oxidation and reduction processes, high purity granular copper-zinc alloy KDF medium, can remove chlorine and toxic heavy metal from the incoming water, but during treatment process, some undissoluble substances such as iron oxides and copper sulfide will deposit on alloy surface, once the alloy surface is covered wholly by those substances, its purification function will be lost; quartz sand and sintered micro-porous material can remove particulate polluter in the incoming water, but once a great quantity of those particulate polluters deposit on the surface, their filtration function will be lost by stopping up, etc.

Therefore, in order to assure that the treated water quality is stable and reliable, the prerequisite must be that the water treatment medium is in the best purification condition from beginning to end. For realizing this aim, except for selecting the water treatment media which with longer life and larger purification capacity, the most effective measure is to install a special device on the water system, regularly to make a backwashing and a forward-washing, timely to clear away the silted harmful materials or to replenish the lost useful materials in the water treatment media, causes that the water treatment media are recovered again to the best purification condition, certainly, here those water treatment media must be recoverable after backwashing. For example,

KDF can be recovered immediately after backwashing, the service life can be over ten years; quartz sand and sintered micro-porous material same can be resumed to original filtration function after backwashing, the service life can be over ten years too; ion exchange resin can be resumed to original softening function after backwashing by salt solution, and the times of regenerating can be more than a thousand. Yet, because the water purification function of active carbon is realized by its capillaries absorption, only under such condition of higher temperature and higher pressure, active carbon can be regenerated, so, under normal atmospheric temperature, by backwashing, active carbon not only cannot be regenerated, but also quicken its adsorption saturation.

This special device that control water treatment system to cyclically change among three different working positions such as purifying, backwashing, and forward-washing, is called as "control valve".

In US6149809 patent, I have discovered a five-channel ball valve, it is a manual control valve, this valve has the following defects: first, it only can be operated manually, but can not be operated automatically; second, the valve core is a ball form, but its valve sleeve is a cylinder, so, there are two sealing disks between the valve core and the valve sleeve, not only increase amount of spares, but also increase volume of valve body; third, because the machining for ball form is very complicated, so, its outside diameter precision is assured hardly, water leaking easily occur.

Automatic control valve widely have applied to the field of industrial water treatment, it is composed of three parts such as a controller, an executor, and a valve body. The controller may be divided into two kinds: the time control model, and the flow control model. The time control model is that, according to a pre-established timing, controller regularly give out a grouping electrical signal to drive executor, and executor further to pull valve core to make a machine-displacement, and finally to realize the changes among three different working positions such as purifying, backwashing, and forward-washing. The flow control model is that, according to a pre-established overall flow, once the treated water add up to this overall flow, controller immediately give out a grouping electrical signal to drive executor, and the executor further to pull valve core to make a machine-displacement, and finally to realize the changes among three different working positions. Because purifying→ backwashing→ forward-washing→ purifying, such fixed operation sequence is determined by water treatment technology, any kind of control valve should be satisfied, therefore, although there are different automatic control valves, but their controllers are more or less alike, as a public technique, here do not give a minute description.

In automatic control valve, selecting what valve body design, coordinating what executor, and how realizing mechanical joint between executor and valve body, these are technical cruxes of automatic control valve, and are main different characters among different automatic control valves also.

In prior technique, according to the difference of valve body structure, automatic control valve also may be divided into two types: the pipe arrangement model, and the piston model. So-called the pipe arrangement model, it is that, along radial direction of valve body, several mutually independent pipes are abreast arranged, on the bases of different conduits flow direction of purifying, backwashing, and forward-washing, regularly to open or to close relevant conduits, finally to realize the changes among such three working positions; obviously, only to install a pipeline electromagnetic valve on every pipe's inlet or outlet, such changes should be completed, so, this group of electromagnetic valve is the executor of pipe arrangement model automatic control valve. So-called the piston model, it is that, the valve body is composed of a cylinder valve sleeve and a cylinder valve core, the valve core being in the valve sleeve and the valve core slips in and out along axial direction of the valve sleeve, during the valve core is located differently at three working positions, the incoming water will flow differently along pre-established conduits of purifying, backwashing, and forward-washing; such design of the valve body, require the executor to pull the valve core to make a reciprocating rectilinear motion, here, this executor must be a whirling motor connected with a gear reduction device. At present market, the automatic control valve produced by GE is a pipe arrangement model, but the automatic control valve produced by PENTAIR is a piston model.

Yet, such two types of automatic control valve commonly have the following defects:
Firstly, the changes among three working positions only can be operated by electricity, but can not be operated by hand, thus, there are two latent risks: when any breakdown arise from the control valve, this system only can be stopped to wait for repairing; during the system is in backwashing or forward-washing position, meet with power cut, because can not be changed into purifying position by hand, only can close the source of water, otherwise, will waste a great quantity of drain-water; secondly, the automatic control valve assembly is bulky; in pipe arrangement model control valve, the number of arranging pipes is more, in addition, in order to ensure enough flow, the diameter of pipe is unable smaller, so, the size of valve body radial direction will be larger, moreover, in order to avoid electromagnetic disturbance among nearby pipeline electromagnetic valves, and ensure opened or closed movements are reliable, the size of valve body axial direction is unable smaller too; in piston model control valve, a whirling motor as executor, must be connected with a gear reduction device, thereby takes a whirl motion of the motor to transfer into a reciprocation rectilinear motion of the valve core, so when defining installed position of the motor and the gear reduction device, if to take the position of valve body as a reference frame, then, along its axial direction, the outside rack of transmission gear must be apart a certain distance from a extremity of the valve body, along its radial direction, the outside rack of transmission gear must be apart a certain distance from center axis of the valve body, therefore, the bulk of a piston model control valve assembly is unable to reduce too; thirdly, their manufacture costs are higher, by above simple description, whether the pipe arrangement model automatic control valve or the piston model automatic control valve, during the executor to pull the valve core for transferring among three working positions, there are a lot of mechanical joint points, thereby not only increase a number of components, but also increase the difficulty of assembling, their manufacture costs are higher inevitably.
Because said defects, directly affects further application and dissemination of automatic control valve. At present, the specialized water treatment departments of industrial and commercial enterprises are the traditional users for automatic control valve, at these users, having specialized operational and servicing personnel, having rational servicing spare parts and special water treatment workshop, having essential purchase fund, therefore above-mentioned defects, such as bulky, higher cost, and only can be operated automatically, but cannot be operated manually, etc., their great importance have not been attached by them often.
Contrarily, for common family, small unit, service trades salesroom, particularly for the resident who live in mine-field and countryside where water body is in serious pollution, when they have purchased a water purifying product installed an automatic control valve, due to they do not understand servicing as well as have not servicing spare parts, once meet with power cut or the breakdown of control valve, only can close source of water, stop use water; due to the indoor space is limited, and the feed pipe was laid nearby floor commonly, if the product size is large, not only require to change original indoor arrangement, but also require to set up several pipes overhead, these are not willing for such users; if the price of product is higher, or the operation charge of product is higher, such users will difficultly accept. No doubt, above-mentioned defects of now available automatic control valves will be pied close attention by the users.

### Summary

The object of this invention is to provide an automatic control valve, that is used both in automation and hand operation, space -saving, and low cost; furthermore, the object of this invention is to provide a series of automatic watersupply treating system which are controlled by this automatic control valve.

In order to realize said objects, this invention includes the following features:
A five-way turn valve comprising: a valve core, a valve sleeve, and a valve cover; wherein said valve core being in said valve sleeve, and then is sealed by said valve cover; wherein said valve core is a cylinder, and it having an incoming water way, a filtered water way, a drain water way, and a valve rod; wherein said valve sleeve and said valve cover having an incoming water inlet, an incoming water outlet, a filtered water inlet, a filtered water outlet, and a drain opening.
A three-position and five-way angular valve comprising: a controller, an executor, and a said five-way turn valve; wherein said controller regularly give an electrical control signal to drive said executor, and said executor further to pull said five-way turn valve to make an angle displacement.

A said three-position and five-way angular valve, said executor is composed of a turn electromagnet, a manual lever, and three limit position switches; wherein one end of the turn electromagnet rotor is inlayed with the valve rod, and another end of the turn electromagnet rotor is inlayed with said manual lever; wherein said three limit position switches are installed on a fixed support matter, and they are electrically connected with the turn electromagnet stator coils.

An automatic watersupply treating system comprising: a said three-position and five-way angular valve, a water purifying assembly, and a group of follow-up water appliances; wherein valve's incoming water inlet is connected with source of water, valve's incoming water outlet is connected with water inlet of the water purifying assembly, valve's filtered water inlet is connected with water outlet of the water purifying assembly, valve's filtered water outlet is connected with water inlets of the follow-up water appliances, and valve's drain opening is connected with the sewer.

Compared with prior techniques, this invention has the following obvious benefits: firstly, for said five-way turn valve, compared with the five-channel ball valve in US6149809 patent, it is only changed a form of valve core from a ball into a cylinder, thus, not only still remain all original functions of the five-channel ball valve, but also leave out two sealing disks, radial and axial size of the valve body are simultaneously reduced, besides, because machining for a cylinder will be more simple compared with a ball, the precision of external diameter will be higher, such not only can lower the material cost as well the machining cost, but also can avoid water leak; secondly, for said three-position and five-way angular valve, compared with said prior two kinds of automatic control valve, it not only can complete all automatic change position functions, but also can complete same change position functions by hand, once meet with such as power cut or breakdown of control valve, user need not to assemble or disassemble any spare parts, only to turn said manual lever by hand, all the same can complete change position operations, thereby, may remit user's trouble back at home; thirdly, for three-position and five-way angular valve, in its executor, rotor of the turn electromagnet is direct inlayed with the valve rod, need not any reduction device or other reversing element, has only one mechanical joint point, so, total volume of the valve assembly is reduced to very small, besides, compared with common whirling motor of same volume, whirling moment of the turn electromagnet is bigger; fourthly, due to mechanical joint point is only one, and has no higher speed whirling motion, so, in said three-position and five-way angular valve, whether the valve body or the executor, their structures are very simple, thereby, amount of the spares is less, machining of spares is simple, assembly processes is less, and requirement for the material quality is general, for these reason, manufacture cost of said three-position and five-way angular valve should be lower certainly.

In addition, as stated above, because prior automatic control valves have said defects, directly affects their further application and dissemination, by comparison, the following several automatic watersupply treating systems controlled by said three-position and five-way angular valve, same have obvious benefits.

Product scheme 1, Removing Heavy Metal Pollutant Water Purifier.

Heavy metal pollution of water body generally existing, for example, in Nepal, due to the geological cause, the arsenic pollution is very serious, lead to local residents are dysplasia and short-lived, therefore, as an important content of the international support, just is the drinking water engineering built; in China, there are tens of millions resident who live in min-field and countryside where the water body is in serious pollution by different toxic heavy metals such as arsenic, lead, nickel, etc.; in Britain, according to a findings report of British Public Health Department, in Britain, the lead toxic children before six years-old are over 400,000, main cause is that, because the corrosion of feed pipe, bring about lead content in the water go beyond the limit.

Therefore, removing heavy metal pollutant water purifier has a vast market. In present techniques, reverse osmosis, electrodialysis, and KDF medium, these total can be used for removing heavy metal from water. But in the first both, product costs are higher, operation costs are higher too, and their filter core replacements are very frequent, particularly the pretreatments for the incoming water are required strictly, obviously, both cannot fit use for such users who live in the backward areas. If adopting KDF medium, this system must be installed an automatic control valve, otherwise, effective life of the system will be very short, but as above stated, due to prior automatic control valve have said defects, same can not meet the needs of said users.

This invention opens a new kind of removing heavy metal pollutant water purifier, it is composed of a miniature three-position and five-way angular valve, and a filter column packed with KDF medium, it can remove tens of toxic heavy metal such as arsenic, lead, nickel etc. from water, its production cost and user's operation charge are very low, effective life is over ten years and can normally operate under adverse circumstance, so, it is no doubt the best drinking water purifier to the family of different strata whose drinking water is in toxic heavy metal pollution.

Product scheme 2, Automatic Home Tap Water Treatment System.

Chlorine was used for disinfecting of tap water is long-standing, though in the middle part of 20^{th} century, there were several states of America once had legislated to prohibit this technology, but the test result made clear, only chlorine was most stable in water, and its disinfect effect was the best, finally this technology was restored. In China, according to the forced national standard, the lowest limit of chlorine content at tap water end outlet is 0.05mg/l, but the highest limit is undefined, take Shanghai city as an example, chlorine content in tap water end outlet is about 0.2mg/l, in summer, it will be higher.

Scientific and technological circles acknowledged side effect from chlorine disinfectant generally. Cause is that, chlorine is combined with organic compound in water, to grow into the toxic carcinogens such as chloroform, trichlorethylene, etc., and compound speed of these toxins is index going up in pace with growth of water temperature, such toxins not only can enter human body by drinking, but also can invade human body through skin or respiratory tract by bathing. Research studies have shown that exposure these toxins is 6 to 100 times greater through showering, bathing and inhalation than through drinking the water, these toxins not only easily induce cancer or other diseases, but also cause such as hair dry, dandruff more, skin itch, etc.

Therefore, out of protecting human health, before heating, to remove chlorine from drinking water and bathing water, this should be a basic task for a home tap water treatment system.

Now, in the market, there are various water purifiers, barreled pure water, and pipeline drinking water, they are only used for drinking, unable used for purifying of bath water. In addition, there is a product called as "shower filter", actually it is a shower nozzle packed with KDF medium, used for removing chlorine from the heated bath water, yet, during heating in the heater, due to water temperature is higher, the compound speed of chlorine with organic compounds is extremely quick, a large number of chlorine is changed into chloride, but KDF medium cannot remove chloride, so, for this shower filter, its action of reducing such toxins content will be very limited. In recent years, another water treatment product called as "center intellectual water purifier" has arisen, it is geared to the needs of rich families, used for purifying total incoming water of a family, in this product, three kinds of water treatment media such as quartz sand, KDF, and active carbon are simultaneously packed at one filter tank, then is controlled by an automatic control valve. For this product, its main defects are the following: the bulk is bigger, the price is higher, the operation cost is higher, and particularly the natural resources are squandered seriously. In such three kinds of water treatment media, for active carbon, compared with both quartz sand and KDF medium, not only its effective life is extremely short, but also cannot be regenerated by backwashing, yet, in this product, total incoming water of a family flow through active carbon, the load of active carbon becomes more weighty, causes its replacement period is very short, user's operation cost become more higher, in addition, for disperse users, replaced active carbon can not be retrieved, only can be thrown away, this is no doubt the natural resources squander, actually, in a family, except the drinking water and the bathing water, greater part of water have not any direct effects with human health or family life quality, common tap water can need user's applied requirement.

This invention opens a new kind of automatic home tap water treatment system, it is composed of a bath water purifier and a drinking water depth purifier, the bath water purifier is composed of a common-sized three-position and five-way angular valve and a water purifying assembly, this water purifying assembly is series connected by a KDF filter column with a sintered micro-porous pipe, and said KDF filter column is installed on the middle empty space of said sintered micro-porous pipe, further, the valve's filtered water outlet is connected with the water inlet of the bath water heater; in addition, said drinking water depth purifier may be any one kind among an active carbon water purifier, a reverse osmosis water purifier, and a nano- filtration water purifier; the water inlet of said drinking water depth purifier not only may be directly connected with said valve's filtered water outlet, but also may be connected with any pipeline which by connecting with said valve's filtered water outlet.

Compared with mentioned-above present techniques, this product scheme 2 has the following obvious benefits: firstly, before heating, bath water and drinking water have been purified simultaneously; secondly, bath water has been purified by both sintered micro-porous pipe and KDF medium, the former removes granular pollutant from the incoming water, not only makes the water to clear and bright, but also to protect KDF medium, the later removes chlorine from water and to soften water quality, such treated bath water, not only may protect human health, but also has obvious effect in hair beautification and skin protection; in addition, said drinking water depth purifier may be wantonly selected among different kinds of water purifier, thus may meet different requirements with drinking water grade of various users; thirdly, in the bath water purifier, because has regular backwashing and forward-washing, whether sintered micro-porous pipe or KDF, their effective lives are over ten years, so, during whole effective life of the product, the bath water purifier is need not replaced any filter core; moreover, for the drinking water depth purifier, due to its incoming water has been fine filtered and has been removed chlorine, so, its filter core replacement period is extended to several times; besides, in a family, drinking water quantity is very less, this means that, the quantity of filter materials such as active carbon used for purifying the drinking water same is very less, to sum up, this automatic home tap water treatment system not only can reduce user's operation cost by a big margin, but also can save natural resource by a big margin; fourthly, because this system is divided into two independent units, both may be direct connected each other , also may be connected by a pipeline, moreover, the KDF column is installed on the middle empty space of sintered micro-porous pipe, so, the bulk of bath water purifier is small, such design, may meet variant indoor layout, and the installation is extremely convenient, therefore, this system not only can fit villa residences, but also can fit common residences.

### Product Scheme 3, Bath Water Purifier

This product structure form is the same with said the bath water purifier of the automatic home tap water treatment system, the differences between both are the following: the former is suitable for water treatment among beauty shop, bathroom and hotel, therefore, the used three-position and five-way angular valve should be a large-sized, and the used water purifying assembly should be a large-sized too.

### Product Scheme 4, Waste Water Reuse System

Full utilizing the superiorities of three-position and five-way angular valve such as used both in automation and hand operation, space-saving, low cost, also can develop various waste water reuse systems suited to different requirements, for example, in residence quarter or business office section, first retreat collected rainwater and other waste water, then provide user's washroom with retreated water.

### Brief Description of the Drawings

Fig.1 is the assembly schematic diagram of turn electromagnet, five-way turn valve, and manual lever.
Fig.2a - Fig.2h are A-A cutaway Views of Fig.1, showing different positions of turn electromagnet rotor and corresponding working conditions.
Fig.3 is the block diagram of three-position and five-way angular valve.
Fig.4 is the flow diagram of three-position and five-way angular valve controller.
Fig. 5 is the back view of five-way turn valve sleeve.
Fig.6 is the half-cutaway view of five-way turn valve core.
Fig.7a- Fig.7c are the back views of five-way turn valve on purifying, backwashing, forward-washing.
Fig.8 is the schematic diagram of a watersupply treating system controlled by a three-position and five-way angular valve.
Fig.9 is the structure schematic diagram of a water purifying assembly.
Fig.10 is the structure schematic diagram of another water purifying assembly.

### Detailed Description of Embodiments

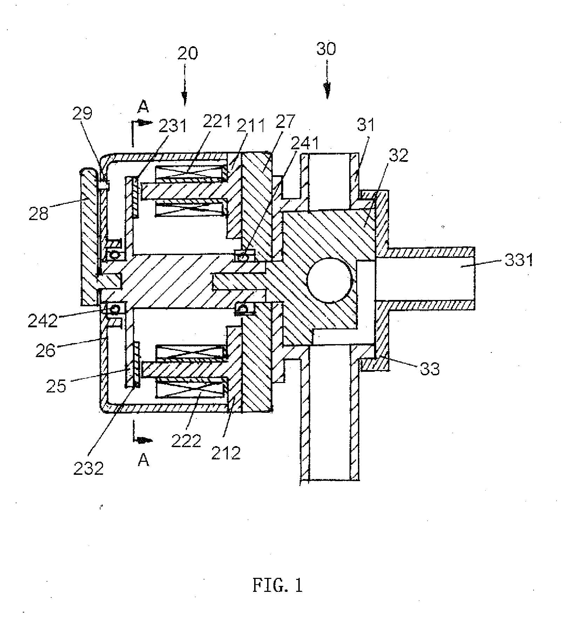

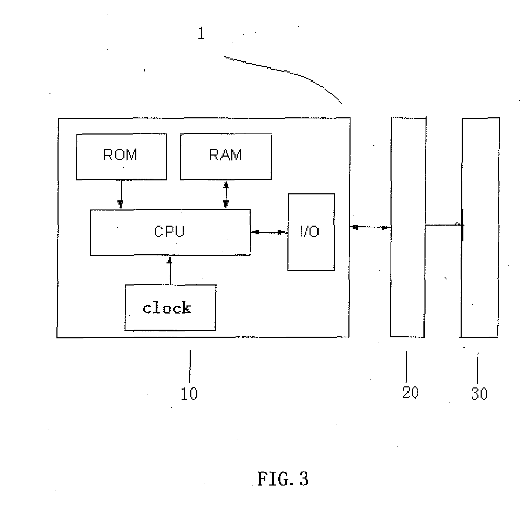

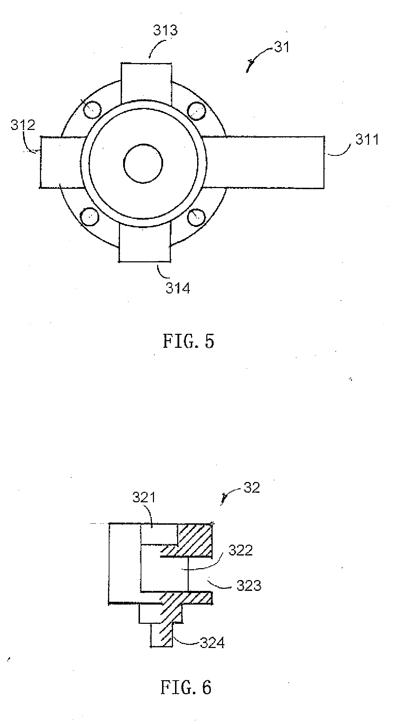

First, referring to FIG.1, FIG.3, FIG.5, and FIG.6, to explain the concrete structure of three-position and five-way angular valve.

Three-position and five-way angular valve is composed of a controller 10, an executor 20, and a five-way turn valve 30.

Controller 10 is a microcomputer, includes a center processor CPU, a read only memory ROM, a random access memory RAM, a CLOCK, and an input and output interface I/O, said I/O must be connected electrically with executor 20.

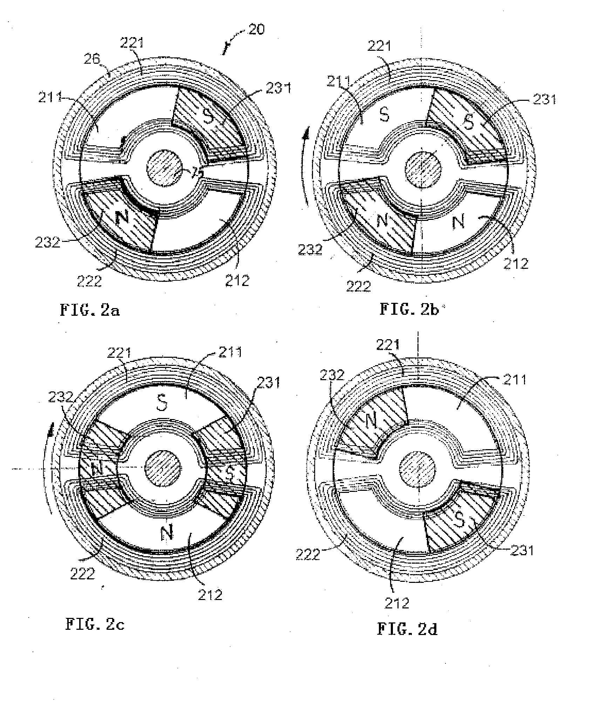

Executor 20 is a turn electromagnet, includes a first stator 211 and a second stator 212, which are installed on a foundation 27 connected with a valve body 31, wherein a first coil 221 is curled on first stator 211, a second coil 222 is curled on second stator 212; wherein a rotor 25 is supported between a foundation 27and a hood 26, and it may be turned through a bearing 241 and a bearing 242; wherein this position of rotor 25where face to face with ends of said two stators is a circular tray, and first permanent magnet 231 is fixed on this circular tray and its S pole is face to face with first stator 211, but second permanent magnet 232 is fixed on this circular tray and its N pole is face to face with second stator 212,about their plane positions on this circular tray, see also FIG.2a; wherein one end of rotor 25 is inlayed directly with valve rod 324, another end of rotor 25 is inlayed with manual lever 28; wherein three limit position switches 29 are installed on hood 26, each included angle between both of them is 45°, and they are electrically connected with first coil 221 and second coil 222 respectively.
Five-way turn valve 30 includes a valve sleeve 31, a valve core 32, and a valve cover 33;wherein said valve core 32 being in said valve sleeve 31, and then is sealed by said valve cover 33; wherein valve core 32 is a cylinder, it having an incoming water way 321, a filtered water way 322, a drain water way 323, and a valve rod 324; wherein valve sleeve 31 and valve cover 33 having an incoming water inlet 331, an incoming water outlet 314, a filtered water inlet 311, a filtered water outlet 312, and a drain opening 313.

Second, referring to FIG.2a~FIG.2h, FIG.4, FIG.7a~FIG.7c, to explain the working process of three-position and five-way angular valve.

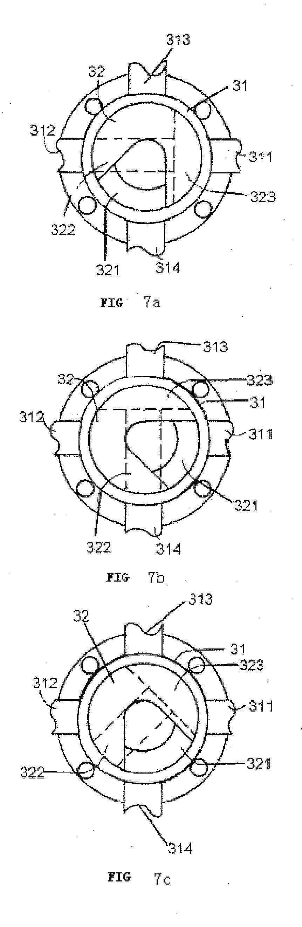

As stated above, rotor 25, valve rod 324, and manual lever 28 are inlayed by each other, so, they can be turned together; therefore, FIG.2a with FIG.7a, FIG.2d with FIG.7b,

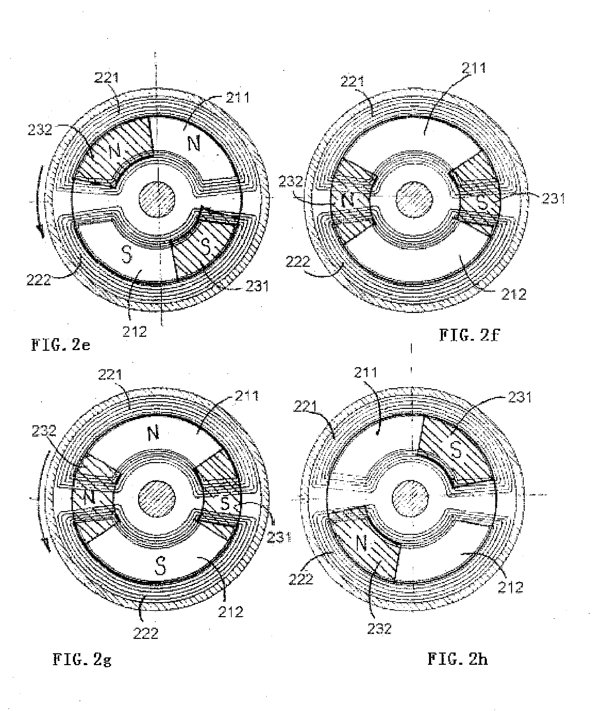

FIG.2f with FIG.7c, are separately correspondence relations. FIG.2a with FIG.7a correspond to first stable working position of three-position and five-way angular valve, namely purifying position; FIG.2d with FIG.7b correspond to second stable working position of three-position and five-way angular valve, namely backwashing position; FIG.2f with FIG7c correspond to third stable working position of three-position and five-way angular valve, namely forward-washing position. Why said three positions are called stable working positions, because at FIG.2a, FIG.2d, FIG.2f, here, on first coil 221 and second coil 222, power supply are suspended simultaneously, thus certainly lead to first stator 211 and second stator 212 have not any polarities, therefore, on rotor 25, there is not turn moment, but there is a friction between valve sleeve 31 and valve core 32, the system is in a stable condition by force.
FIG.2b, FIG.2c, FIG.2e, FIG.2g, dynamically describe the changing processes among said three stable working positions, thus FIG2a~FIG.2h, truly reflect whole process during each working cycle.
Here, take FIG2b as an example, thoroughly explain it working principle, but the others steps only are summarized. At FIG.2b, can be seen, after being received the first execution instruction from the controller, the power supply immediately put a group voltages of corresponding polarity toward first coil 221 and second coil 222 simultaneously, causes first stator 211 to assume a S pole, and causes second stator 212 to assume a N pole, now, the S pole of first permanent magnet 231 with the S pole of first stator 211, and the N pole of second permanent magnet 232 with the N pole of second stator 212 are exclusion each other; but the S pole of first permanent magnet 231 with the N pole of second stator 212, and the N pole of second permanent magnet 232with the S pole of first stator 211 are attraction each other, thus on rotor 25, produces a clockwise turn moment, under acting of this turn moment, rotor 25 is turned clockwise, but when its turned angle is reaching 45°, manual lever 28 will touch with a limit position switch 29 on corresponding position, now, all voltages putted on first coil 221 and second coil 222 are broken immediately, the polarities of first stator 211 and second stator 212 have not too, the turn moment on rotor 25 is disappeared, rotor 25 is stopped up, it is placed at the position showed as FIG.2c; follow closely, after being received the second execution instruction from the controller, the power supply again put a group voltages of same polarity toward first coil 221 and second coil 222, certainly, rotor 25 will be turned clockwise for 45° again, and placed on the position showed as FIG2d, thereby, the working position change from purifying into backwashing has being finished. After going through a T2 that a backwashing working time set up in advance, the controller give out the third execution instruction, the power supply immediately put a group voltages toward first coil 221 and second coil 222, but now the polarities of these voltages are completely opposite compared with prior two steps, thus, showed as FIG.2e, first stator 211 is assumed N pole, but second stator 212 is assumed S pole, in view of above mentioned same principle, under acting of a anticlockwise moment, rotor 25 is turned to anticlockwise 45°, placed on third stable working position showed as FIG.2f, namely forward-washing position; same, after going through a T3 that a forward-washing working time set up in advance, the controller give out the fourth execution instruction, the power supply again put a group voltages toward first coil 221 and second coil 222, now the polarities of voltages are same with FIG.2e, showed as FIG.2g, under acting of an anticlockwise moment, rotor 25 is turned again for anticlockwise 45°, finally placed on original purifying working position showed as FIG.2h. Up to now, the three-position and five-way angular valve has been finished all change tasks on one working cycle.

As stated in background information, in order to ensure water treatment media are in the best purifying condition from beginning to end, above-mentioned operation cycle of purifying-backwashing-forward-purifying must be regularly made, T1is a period time between two operation cycles. Because the qualities of incoming water are different, and the amounts of treated water are different, so, for different users, the period time between two operation cycles should be different too. The user on the basis of actual situation, may import a time period T1 selected by self into the memory of controller 10, on the occasion, after going through a T1, controller 10 will give out a group execution instructions above-mentioned sequence, and begin the next working cycle.

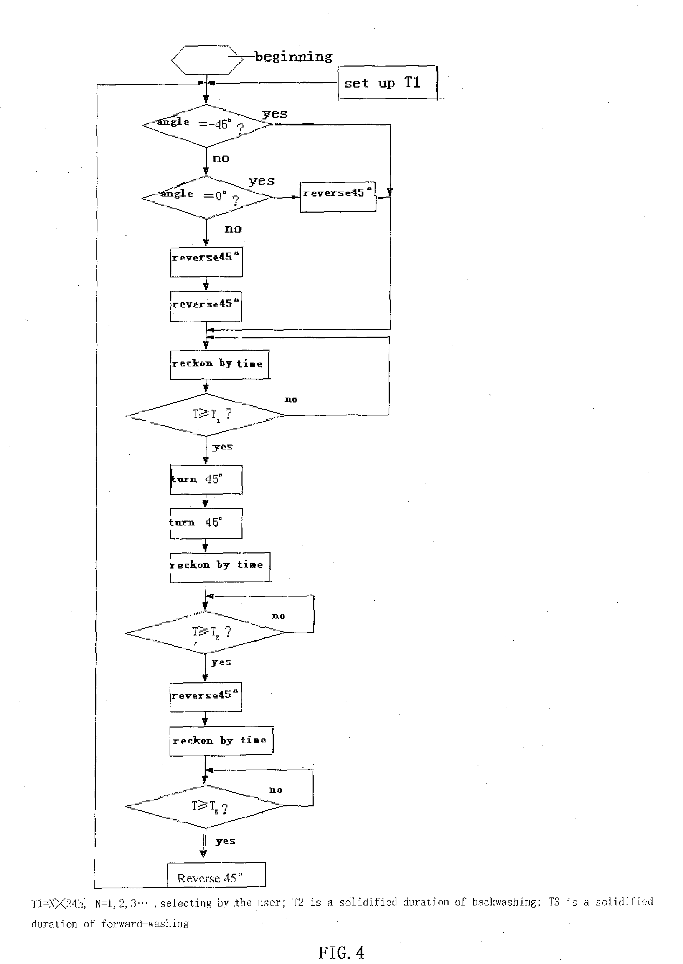

FIG.4 is a flow diagram of three-position and five-way angular valve, here the former three steps of operation sequence are voluntary checking operation sequence of the system, for ensuring that the system is in purifying position when each working cycle is beginning.
Finally, combine FIG.7a~FIG.7c, FIG.8, FIG.9, FIG.10, to explain the structure and working process of the automatic watersupply treating system controlled by the three-position and five-way angular valve.

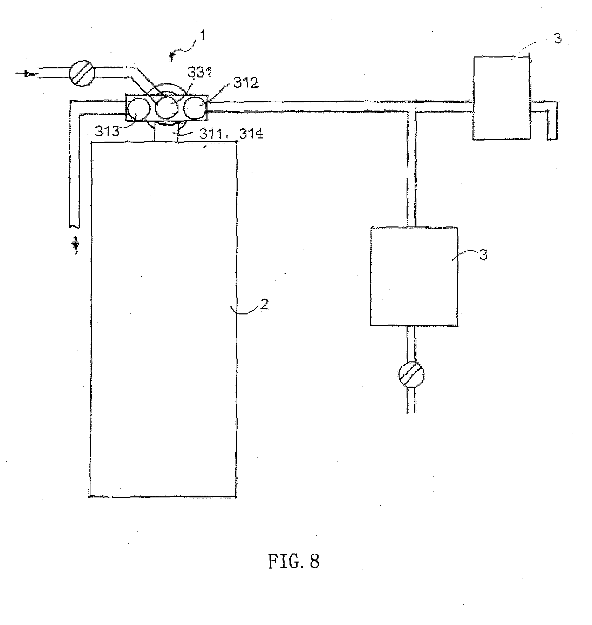

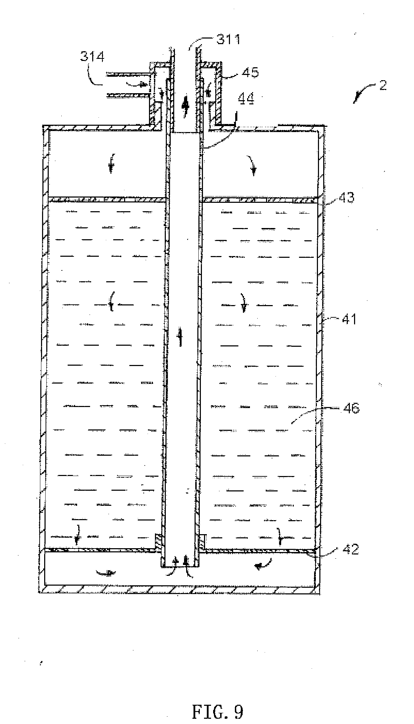

Referring to FIG.8, FIG.9, this automatic watersupply treating system comprising: a three-position and five-way angular valve 1, a water purifying assembly 2, a group follow-up water appliances 3; wherein valve's incoming water inlet 331 is connected with source of water, valve's incoming water outlet 314 is connected with inlet of water purifying assembly 2, valve's filtered water inlet 311 is connected with outlet of water purifying assembly 2, valve's filtered water outlet 312 is connected with inlet of follow up water appliances 3, and valve's drain opening 313 is connected with the sewer; wherein water purifying assembly 2 is composed of a filter tank 41, a water treatment medium bracket 42, a water treatment medium upper cover 43, a middle water pipe 44, a link screw cap 45, and water treatment medium 46.
First to explain purifying working process, referring to FIG.7a, FIG.8, FIG.9, here, flow direction of the incoming water is the following: source of water→ incoming water inlet 331→incoming water way 321→incoming water outlet 314→ link screw cap 45→water treatment medium supper cover 43→ water treatment medium 46→water treatment medium bracket 42→ middle water pipe 44→ filtered water inlet 311→ filtered water way 322→filtered water outlet 312→inlet of follow-up water appliances 3. Obviously, at purifying position, incoming water passes through water treatment medium 46 in a forward direction, for finishing the purifying of water, but in pace with gradually increase of treated water quantity, pollutants that stemmed or adsorbed by water treatment medium are amassed gradually too, causes purifying function of the water treatment medium to drop gradually, until the water treatment medium is stopped up or saturated completely, if do not backwash timely, will lead to full lose its purifying function.
Second to explain backwashing working process, referring to FIG.7b, FIG.8, FIG.9, here flow direction of the incoming water is the following: source of water→ incoming water inlet 331→ incoming water way 321→ filtered water inlet 311→ middle water pipe 44→ water treatment medium bracket 42→ water treatment medium 46→ water treatment medium upper cover 43→ link screw cap 45→ incoming water outlet 314→ filtered water way 322→ drain opening 313→ sewer. Obviously, at backwashing position, incoming water passes through water treatment medium 46 in a backward direction, for backwashing water treatment medium, once the pressure of the incoming water is enough higher, the incoming water can winnow the water treatment medium in backward direction, those pollutants amassed in the water treatment medium should be flushed out. Must to point out, during backwashing, the flushed out pollutants are had been amassed in the water treatment medium during purifying process, but when backwashing, pollutants in the incoming water same should be detained on reverse side of the water treatment medium, now if immediately change working position from backwashing into purifying, then, those pollutants detained on reverse side of water treatment medium certainly influence the incoming water quality of follow up water appliances 3, this is why after backwashing must to make a forward-washing.

Finally to explain forward-washing working process, referring to FIG.7c, FIG.8, FIG.9, here, flow direction of the incoming water is the following: source of water →incoming water inlet 331→ incoming water way 321→ incoming water outlet 314→ link screw cap 45→ water treatment medium upper cover 43→water treatment medium 46→ water treatment medium bracket 42→middle water pipe 44→ filtered water inlet 311→ drain water way 323→ drain opening 313→ sewer. Obviously, at forward-washing position, the incoming water passes through the water treatment medium 46 in a forward direction, for flushing out the pollutants detained on reverse side of the water treatment medium during backwashing.

So far, the water treatment medium is truly returned to its original purifying working condition.

In addition, from FIG.9, can be seen too, only to add several water treatment medium bracket 42 at said filter tank 41, and to pack several kinds of water treatment medium on each bracket, a multistage filtration system can be realized immediately, but its result will lead to increase volume of the filter tank. In a water treatment system controlled by an automatic control valve, if adopt multistage filtration, must uphold the following principles: first, selecting the water treatment media that may be regenerated immediately by backwashing as far as possible, such as quartz sand, maifan rock, sintered micro-porous pipe, KDF medium, etc.; second, in order to avoid inconvenience of users, if use single filter tank to realize a multistage filtration, must rationally arrange in the amounts of different water treatment media according to their purifying content, for replacing all kinds of water treatment media at the same time; third, once said second cannot be satisfied, may adopt another scheme, by an automatic control valve to control a filter tank packed with single water treatment medium, then several filter tanks are series connected together, now, because the water treatment media packed in each filter tank are different, so, corresponding operation cycle period time T1 of each filter tank should be different too.

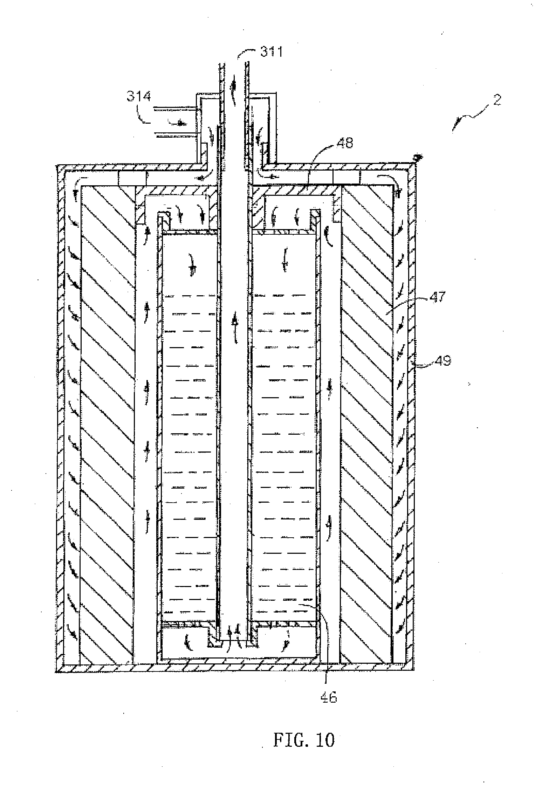

In order to realize the purpose that a multistage filtration don't increase volume of filter tank, FIG.10 opens an optimum scheme, compared with FIG.9, it is only added to a sintered micro-porous pipe 47, a stopper 48, and an outer filter tank 49, here, a small-bore filter tank 41 packed with KDF medium is installed in middle vacant place of sintered micro-porous pipe 47, when purifying, because there is a stopper 48, the incoming water can not flow into middle vacant place of sintered micro-porous pipe 47, only can flow into the space between outer wall of sintered micro-porous pipe 47 and inner wall of outer filter tank 49, then flow through sintered micro-porous pipe 47 in radial, then further flow through KDF medium 46 in axial, the former to accomplish precise filtration, to remove particulate pollutants, the later to remove chlorine, to soften the incoming water and kill the germs, finally provide follow-up water appliances 3 with purified water; obviously, when backwashing, the incoming water first flow through KDF medium 46 in a backward direction, to backwash KDF, then flow into the internal cavity of sintered micro-porous pipe 47 and further flow through this pipe in a backward direction, to backwash it, finally flow into the sewer; certainly there is a forward-washing finally too. Because whether KDF medium or sintered micro-porous pipe, they have the common character that may be regenerated by backwashing, so, only the used quantity of KDF medium in addition the filtration precision and the geometry size of sintered micro-porous pipe are arranged in rationally, effective life of this water purifying assembly will be over ten years.

Besides, FIG.8 make clear too, at an automatic watersupply treating system controlled by a three-position and five-way angular valve, the amount of follow-up water appliances 3 may be more than one, as another optimum scheme of this invention, in FIG.8, water purifying assembly 2 is adopted the optimum scheme showed by FIG.10, and follow-up water appliances 3 have two pieces: a bath water heater and a drinking water depth purifier, said drinking water depth purifier may be any one kind among active carbon purifier, nano-filtration purifier, reverse osmosis purifier; the water inlet of said drinking water depth purifier can be directly connected with filtered water outlet 312 of three-position and five-way angular valve, as well as can be connected with a incoming water pipeline of said bath water heater. Said composed product is an integrated Automatic Home Water Treatment System. Here, because the incoming water of the drinking water depth purifier is already pre-treated by water purifying assembly 2, so, the water treatment media replacement period for said drinking water purifier is extended to several times certainly.

No matter what various changes of the controller operation sequence, different selections of water treatment media, and different combinations of follow-up water appliances, without departing from the spirit and scope of this invention, as defined in the claims.

## Claims

1. A five-way turn valve comprising:
a valve core, a valve sleeve, and a valve cover,
wherein said valve core being in said valve sleeve and then is sealed by said valve cover,
wherein said valve core is a cylinder, it having an incoming water way, a filtered water way, a drain water way, and a valve rod,
wherein said valve sleeve and valve cover having an incoming water inlet, an incoming water outlet, a filtered water inlet, a filtered water outlet, and a drain opening.

2. A three-position and five-way angular valve comprising:
a controller, an executor, and a five-way turn valve of claim 1,
wherein said controller regularly give an electrical control signal to drive said executor, and said executor further to pull said five-way turn valve to make an angle displacement.

3. The three-position and five-way angular valve of claim 2, wherein said executor is composed of a turn electromagnet, a manual lever, and three limit position switches,
wherein one end of the turn electromagnet rotor is inlayed with the valve rod, and another end of the turn electromagnet rotor is inlayed with said manual lever,
wherein said three limit position switches are installed on a fixed support matter, and they are electrically connected with the turn electromagnet stator coils.

4. An automatic watersupply treating system comprising:
a three-position and five-way angular valve of claim 2, a water purifying assembly, and a group of follow-up water appliances,
wherein valve's incoming water inlet is connected with source of water, valve's incoming water outlet is connected with water inlet of the water purifying assembly, valve's filtered water inlet is connected with water outlet of the water purifying assembly, valve's filtered water outlet is connected with water inlets of the follow-up water appliances, and valve's drain opening is connected with the sewer.

5. The automatic watersupply treating system of claim 4, wherein said water purifying assembly is a filtration column packed with KDF medium.

6. The automatic watersupply treating system of claim4, wherein said water purifying assembly is composed of a sintered micro-porous pipe, and a filtration column packed with KDF medium, the later is installed in middle vacant place of the former, and both are series connected together.

7. The automatic watersupply treating system of claim 4, wherein said water purifying assembly is composed of a sintered micro-porous pipe, and a filtration column packed with KDF medium, the later is installed in middle vacant space of the former, and both are series connected together, wherein said follow-up water appliances have a bath water heater and a drinking water depth purifier, and said drinking water depth purifier is any one kind among active carbon purifier, nano-filtration purifier, reverse osmosis purifier.

8. The automatic watersupply treating system of claim 4, wherein in said water purifying assembly, the packed water treatment medium is anyone kind among quartz sand, maifan rock, ion exchange resin, particulate active carbon, sintered micro-porous pipe, etc.

9. The automatic watersupply treating system of claim 4, wherein said follow-up water appliance is another water treatment equipment controlled by a three-position five-channel angled valve.
